# EUROPEAN PATENT SPECIFICATION

(11) **EP 4 594 050 B1**
(45) Date of publication and mention of the grant of the patent: **28.10.2026**
(21) Application number: 23786731.2
(22) Date of filing: 29.09.2023
(51) Int. Cl.: B24D 3/28, B24D 11/00, C09G 1/02, C09K 3/14

(54) **SUPERSIZE COATING COMPOSITION, ABRASIVE ARTICLE, AND METHOD OF MAKING ABRASIVE ARTICLE**
ÜBERGROSSE BESCHICHTUNGSZUSAMMENSETZUNG, SCHLEIFARTIKEL UND VERFAHREN ZUR HERSTELLUNG EINES SCHLEIFARTIKELS
COMPOSITION DE REVÊTEMENT DE SUPERTAILLE, ARTICLE ABRASIF ET PROCÉDÉ DE FABRICATION D'ARTICLE ABRASIF

(30) Priority: 29.09.2022 US 202263411462 P
(43) Date of publication of application: 06.08.2025
(73) Proprietor: 3M Innovative Properties Company, Saint Paul, Minnesota 55133-3427 (US)
(72) Inventor: NIETFELD, Jon P., Saint Paul, Minnesota 55133-3427 (US); GRAHAM, Paul D., Saint Paul, Minnesota 55133-3427 (US); YANG, Yugeun P., Saint Paul, Minnesota 55133-3427 (US); MAHLI, David M., Saint Paul, Minnesota 55133-3427 (US)
(74) Representative: Vossius & Partner Patentanwälte Rechtsanwälte mbB
(86) International application number: PCT/IB2023/059789
(87) International publication number: WO 2024/069578

(56) References cited:
- WO-A1-2017/180468
- BR-A2- PI0 614 000
- CN-A- 109 986 477
- CN-A- 110 177 652
- JP-A- 2021 529 672

## Description

### Technical Field

The present disclosure generally relates to a supersize coating composition, an abrasive article including the supersize coating composition, and a method of making the abrasive article.

### Background

Abrasive articles are used by consumers, manufacturers, and service providers in various industries to abrade work pieces by hand or by machine processes, such as by lapping, grinding, or polishing. Most widely used abrasive articles are flexible abrasives, three-dimensional abrasives and liquid abrasives. Printed flexible abrasive articles which are printed and in which the graphic image is permanently imparted onto the rough side of the abrasive sheet offer unique benefits to both manufacturers and consumers. The ability to place graphics on an abrasive can enhance its appearance and provide branding or promotional information. Further, technical details such as its grade, grit size, or safety information can be also effectively communicated to the user by the inclusion of printed information.

Abrasive articles typically include a backing, an abrasive layer, and a supersize coat. The supersize coat composition also referred to as a "antiloading coat" is added to a coated abrasive article to minimize loading and extend the cut life of the abrasive article. Most commercially available supersize compositions are supplied as water-based dispersions containing a metal salt of a fatty acid, such as zinc stearate and calcium stearate. While both zinc and calcium stearate are very effective at reducing loading, coatings produced with them often have an opaque and a chalky appearance. Therefore, it is desirable to provide a supersize coating composition which does not affect the anti-loading performance of the supersize coat and at the same time results in dried supersize coatings that are substantially transparent ("clear").
EP-A-1 907 476, forming the basis for the preamble of claim 1, refers to an abrasive product comprising: a) a plurality of abrasive particles; and b) a resin cured with a polythiol group.
EP-A-3 558 590 relates to a fixed abrasive article comprising: a substrate; an abrasive layer disposed on the substrate, wherein the abrasive layer comprises a plurality of abrasive particles disposed on or in a polymeric make coat binder composition; and a size coat disposed over the abrasive layer, wherein the size coat comprises a polymeric size coat binder composition, and a supersize coat disposed over the size coat, wherein the supersize coat comprises a tribological performance enhancing composition disposed on or in a polymeric supersize coat binder composition.
EP-A-3 774 181 is directed to an abrasive article comprising: a substrate comprising a web of lofty nonwoven fibers; a first polymeric binder ("make") composition disposed on the nonwoven fibers; and a blend of abrasive particles disposed on the polymeric binder, wherein the fibers have an average fiber diameter,
wherein the blend comprises a plurality of first abrasive particles having an average particle size that is equal to or larger than the average fiber diameter, and wherein the blend comprises a plurality of second abrasive particles having an average particle size that is smaller than the average fiber diameter.
CN-A-109986477 discloses a specific coating abrasive having an anti-loading composition. The anti-loading composition comprises metallic stearate, a performance component and a polymer abrasive composition.

### Summary

In a first aspect, a supersize coating composition for an abrasive article is provided. The supersize coating composition comprises a metal salt of a long-chain fatty acid and sodium lauryl sulfate (SLS), wherein sodium lauryl sulfate is present in an amount of from 5 percent to 30 percent based on an overall weight of the supersize coating composition. The metal salt of the long-chain fatty acid preferably comprises zinc stearate or calcium stearate.

In a second aspect, an abrasive article is provided. The abrasive article comprises a plurality of layers, in the following order: a backing; an abrasive layer disposed on the backing; and a supersize coat comprising the supersize coating composition of the first aspect.

In a third aspect, a method of making an abrasive article is provided, the method comprising: dispersing a metal salt of a long-chain fatty acid in water to provide a dispersion; blending the dispersion with sodium lauryl sulfate to form a supersize coating composition; coating the supersize coating composition onto an abrasive layer to form a wet supersize coat; and removing the water from the wet supersize coat to form a dry supersize coat.

The details of one or more examples of the disclosure are set forth in the accompanying drawings and the description below. Other features, objects, and advantages of the disclosure will be apparent from the description and drawings, and from the claims.

### Brief Description of Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIGS. 1-5 are side cross-sectional views of abrasive articles according to various exemplary embodiments;
FIG. 6 is a flowchart for a method of forming the abrasive article, according to an embodiment of the present disclosure;
FIG. 7 illustrates the images of the cleaned glass panels coated with composition of Examples 1-10;
FIG. 8 is a graph of measured percentage (%) transmission of coated glass samples;
FIG. 9 illustrates the images of the cleaned glass panels coated with composition of Examples 11-22;
FIG. 10 is a graph of measured percentage transmission of coated glass samples;
FIG. 11 illustrates various images of samples coated with composition of Examples 23-25;
FIG 12 is a graph of cut performance data from supersized disc samples; and
FIG. 13 is a graph of surface roughness measurements after sanding with the lab made samples.

### Detailed Description

Described in more detail herein are abrasive articles, supersize compositions, and methods of making and using the same.

In the following description, reference is made to the accompanying figures that form a part thereof and in which various embodiments are shown by way of illustration. It is to be understood that other embodiments are contemplated.

The following detailed description, therefore, is not to be taken in a limiting sense.

In the following disclosure, the following definitions are adopted.

As used herein, all numbers should be considered modified by the term "about". As used herein, "a," "an," "the," "at least one," and "one or more" are used interchangeably.

The term "substantially", unless otherwise specifically defined, means to a high degree of approximation (e.g., within +/- 10% for quantifiable properties) but again without requiring absolute precision or a perfect match.

The term "about", unless otherwise specifically defined, means to a high degree of approximation (e.g., within +/- 5% for quantifiable properties) but again without requiring absolute precision or a perfect match.

The words "preferred" and "preferably" refer to embodiments described herein that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention.

### ABRASIVE ARTICLE CONSTRUCTIONS

Further details on abrasive article constructions, backings, abrasive layers, supersize coat, and attachments layers are described in respective subsections below.

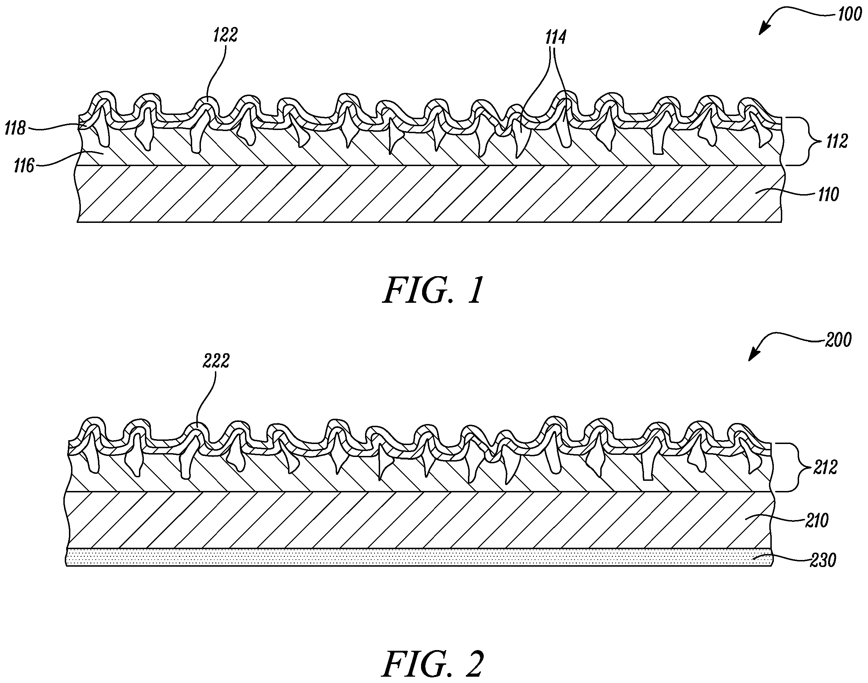

An exemplary abrasive article, shown in FIG. 1, is illustrated according to one embodiment and herein referred to by the numeral 100. As shown, the abrasive article 100 includes a plurality of layers. From the bottom to the top, with the abrasive surface facing upwards, these layers include: a backing 110, an abrasive layer 112, and a supersize coat 122. Here, the abrasive layer 112 is itself multilayered and includes a make coat 116, abrasive particles 114, and a size coat 118.

FIG. 2, like FIG. 1, shows an abrasive article 200 having a backing 210, an abrasive layer 212, and a supersize coat 222. The abrasive article 200 additionally has a continuous attachment layer 230 that extends across and directly contacts a major surface of the backing 210 facing away from the abrasive layer 212. In the exemplary embodiment depicted here, the attachment layer 230 is a removable pressure- sensitive adhesive.

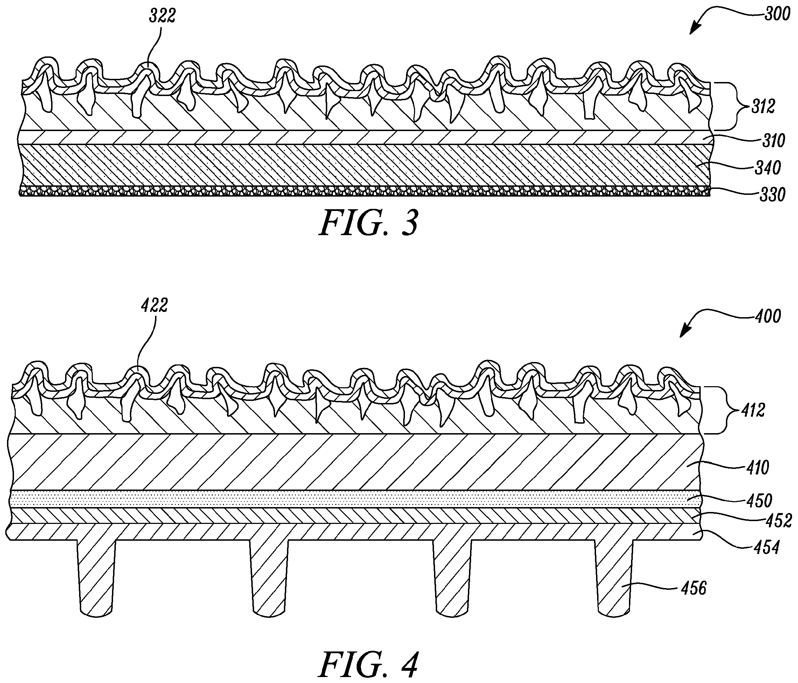

FIG. 3, like FIGS. 1 and 2, shows an abrasive article 300 having a backing 310, an abrasive layer 312, and a supersize coat 322. Like the abrasive article 200 in FIG. 2, the abrasive article 300 has an attachment layer 330. In this case, the attachment layer 330 is one part of a hook-and-loop attachment mechanism. A polymeric compressible foam 340 is interposed between the backing 310 and the attachment layer 330. Optionally but not shown, one or more additional layers can be disposed between any of the above layers to help adhere layers to each other, provide a printed image, act as a barrier layer, or serve any other purpose known in the art. By providing compressibility to the abrasive article 300, the compressible foam 340 can enable a more uniform contact with the workpiece to the abraded, and particularly so where the workpiece has non-planar contours. As a further option, the backing 310 and compressible foam 340 can be consolidated into a single layer that serves both functions.

FIG. 4, like FIGS. 1-3, shows an abrasive article 400 having a backing 410, an abrasive layer 412, and a supersize coat 422. The abrasive article 400 further includes an adhesive layer 450 bonding the backing 410 to an underlying reinforcing layer 452, which is in turn adhered to a gripping layer 454. The gripping layer 454 includes integral protrusions 456 that extend outwardly from the backing and assist the operator in handling the abrasive article 400. To provide improved handling of the abrasive article 400, it is beneficial for the gripping layer 454 to be made from an elastomeric polymer, and preferably elastomeric polymers having a Shore A hardness ranging from 5 to 90. Further information concerning useful materials and geometries for the gripping layer 454 are described in U.S. Patent No. 6,372,323 (Kobe et al.) and co-pending International Patent Application No. PCT/US 15/61762 (Graham et al.).

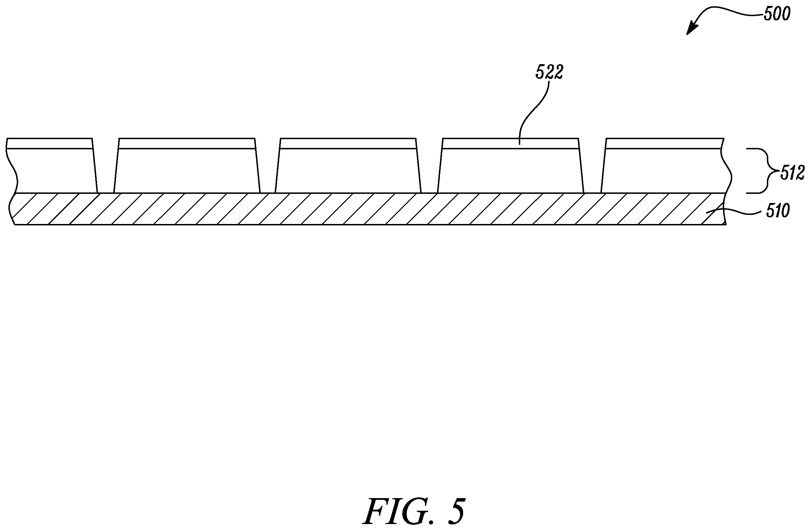

FIG. 5, like FIGS. 1-4, shows an abrasive article 500 having a backing 510, an abrasive layer 512, and supersize coat 522. The abrasive article 500 differs from the others in that the abrasive layer 512 comprises of discontinuous, or discrete, islands of a hardened abrasive composite. Such a composite can be made by uniformly mixing abrasive particles with a binder to form a viscous slurry. This slurry can then be cast and appropriately hardened (for example, using a thermal or radiation curing process) onto the backing 510 to obtain the abrasive layer 512, as shown in FIG. 5.

The layer configurations described above are not intended to be exhaustive, and it is to be understood that one or ordinary skill may add or remove layers with respect to any of the embodiments depicted in FIGS. 1-5 for reasons already known in the art.

### BACKING

The aforementioned abrasive articles generally include a backing, such as any of the backings 110, 210, 310 410, 510 described above. The backing may be constructed from any of a number of materials known in the art for making coated abrasive articles. Although not necessarily so limited, the backing can have a thickness of at least 0.02 millimeters, at least 0.03 millimeters, 0.05 millimeters, 0.07 millimeters, or 0.1 millimeters. The backing can have a thickness of up to 5 millimeters, up to 4 millimeters, up to 2.5 millimeters, up to 1.5 millimeters, or up to 0.4 millimeters.

The backing is preferably flexible and may be either solid (as shown in FIG. 1) or porous. Flexible backing materials include polymeric film (including primed films) such as polyolefin film (e.g., polypropylene including biaxially oriented polypropylene, polyester film, polyamide film, cellulose ester film), polyurethane rubber, metal foil, mesh, foam (e.g., natural sponge material or polyurethane foam), cloth (e.g., cloth made from fibers or yarns comprising polyester, nylon, silk, cotton, and/or rayon), scrim, paper, coated paper, vulcanized paper, vulcanized fiber, nonwoven materials, combinations thereof, and treated versions thereof. The backing may also be a laminate of two materials (e.g., paper/film, cloth/paper, film/cloth). Cloth backings may be woven or stitch bonded. In some embodiments, the backing is a thin and conformable polymeric film capable of expanding and contracting in transverse (i.e. in-plane) directions during use.

Preferably, a strip of such a backing material that is 5.1 centimeters (2 inches) wide, 30.5 centimeters (12 inches) long, and 0.102 millimeters (4 mils) thick and subjected to a 22.2 Newton (5 Pounds-Force) dead load longitudinally stretches at least 0.1%, at least 0.5%, at least 1.0%, at least 1.5%, at least 2.0%, at least 2.5%, at least 3.0%, or at least 5.0%, relative to the original length of the strip. Preferably, the backing strip longitudinally stretches up to 20%, up to 18%, up to 16%, up to 14%, up to 13%, up to 12%, up to 11%, or up to 10%, relative to the original length of the strip. The stretching of the backing material can be elastomeric (with complete spring back), inelastic (with zero spring back), or some mixture of both. This property helps promote contact between the abrasive particles 114 and the underlying workpiece, and can be especially beneficial when the workpiece includes raised and/or recessed areas.

Useful backing materials can be highly conformable. Highly conformable polymers that may be used in the backing include certain polyolefin copolymers, polyurethanes, and polyvinyl chloride. One particularly preferred polyolefin copolymer is an ethylene- acrylic acid resin (available under the trade designation "PRIMACOR 3440" from Dow Chemical Company, Midland, MI). Optionally, ethylene- acrylic acid resin is one layer of a bilayer film in which the other layer is a polyethylene terephthalate ("PET") carrier film. In this embodiment, the PET film is not part of the backing itself and is stripped off prior to using the abrasive article 100. While it is possible to strip the PET from the ethylene- acrylic acid resin surface, the ethylene-acrylic acid resin and the PET can also be bonded such that these two layers stay together during use of the abrasive article.

Optionally, the backing may have at least one of a saturant, presize layer, or backsize layer. These materials can be used to seal the backing or to protect yarn or fibers present in the backing. If the backing is a cloth material, at least one of these materials is typically used. Advantageously, the addition of the presize layer or backsize layer can provide a smoother surface on either the front and/or the back side of the backing. Other optional layers known in the art may also be used, as described in U.S. Patent No. 5,700,302 (Stoetzel et al.).

### ABRASIVE LAYER

The abrasive layer is a layer containing a hard mineral that serves to abrade the workpiece. The abrasive layer can be any of the abrasive layers 112, 212, 312, 412, 512 described above. In FIGS. 1-4, the abrasive layer is a coated abrasive film that includes a plurality of abrasive particles 114 secured to a plurality of hardened resin layers. The abrasive particles 114 are adhesively coupled to or disposed on the backing by implementing a sequence of coating operations involving the hardenable make coat 116 and size coat 118. It is common for the make coat 116 to include a curable polymeric resin in which the abrasive particles 114 are at least partially embedded and the size coat 118 to include the same or optionally a different curable polymeric resin disposed on the make coat 116.

In the configuration shown in FIGS. 1-4, the abrasive particles 114 are partially or fully embedded in the respective make and size coats 116, 118 in close proximity to the surface of the abrasive article 100. This allows the abrasive particles 114 to easily come into frictional contact with the workpiece when the abrasive article 100 is rubbed against the workpiece.

The abrasive particles 114 may be composed of any of a variety of hard minerals known in the art. Examples of suitable abrasive particles include, for example, fused aluminum oxide, heat treated aluminum oxide, white fused aluminum oxide, black silicon carbide, green silicon carbide, titanium diboride, boron carbide, silicon nitride, tungsten carbide, titanium carbide, diamond, cubic boron nitride, hexagonal boron nitride, garnet, fused alumina zirconia, alumina-based sol gel derived abrasive particles, silica, iron oxide, chromia, ceria, zirconia, titania, tin oxide, gamma alumina, and mixtures thereof. The alumina abrasive particles may contain a metal oxide modifier. The diamond and cubic boron nitride abrasive particles may be monocrystalline or polycrystalline.

There is almost always some range or distribution of abrasive particle sizes. Such a distribution can be characterized by its median particle size. For instance, the median particle size of the abrasive particles may be at least 0.001 micrometers, at least 0.005 micrometers, at least 0.01 micrometers, at least 0.015 micrometers, or at least 0.02 micrometers. In some instances, the median particle size of the abrasive particles may be up to 300 micrometers, up to 275 micrometers, up to 250 micrometers, up to 150 micrometers, or up to 100 micrometers.

FIG. 5 shows an alternative kind of abrasive layer. In this embodiment, the abrasive layer 512 is comprised of discrete islands of an abrasive composite. Such a composite can be made by uniformly mixing abrasive particles with a binder to form a viscous slurry. This slurry can then be cast and appropriately hardened (for example, using a thermal or radiation curing process) onto the backing 510 to form the abrasive layer 512, as shown in FIG. 5. The cast slurry can be cast onto the backing in a continuous layer or a patterned, discontinuous layer, as shown in FIG. 5.

Optionally, the abrasive slurry is molded onto a suitable backing to form a structured abrasive. Structured abrasives can be made by mixing abrasive particles and a hardenable precursor resin in a suitable binder resin (or binder precursor) to form a slurry, casting the slurry between the underlying film and a mold having tiny geometric cavities, and then hardening the binder. After hardening, the resulting abrasive coating is molded into a plurality of tiny, precisely shaped abrasive composite structures affixed to the underlying film. The hardening of the binder can be achieved by a curing reaction triggered by heat or exposure to actinic radiation. Examples of actinic radiation include, for example, an electron beam, ultraviolet light, or visible light.

### SUPERSIZE COAT

Supersize coat is the outermost coating of the abrasive article and directly contacts the workpiece during an abrading operation. The supersize coat can be any of the supersize coats 122, 222, 322, 422, 522 described above. The supersize coat has a composition that acts to reduce the loading of swarf around the abrasive particles and improve the overall cut performance of the abrasive article. A first major component of the provided supersize coats is a metal salt of a long-chain fatty acid. In preferred embodiments, the metal salt of a long-chain fatty acid is a stearate (i.e., a salt of stearic acid). The conjugate base of stearic acid is C₁₇H₃₅COO⁻, also known as the stearate anion. Useful stearates include calcium stearate and zinc stearate.

The amount of metal salt of a long-chain fatty acid in the supersize coating composition can vary. In some embodiments, the amount of metal salt of a long-chain fatty acid may not be less than 70 percent, not less than 75 percent, not less than 80 percent, not less than 85 percent, not less than 90 percent, or not less than 95 percent by weight based on the total weight of the supersize coat. In some other embodiments, metal salt of a long-chain fatty acid can be present in an amount of up to 70 percent, up to 75 percent, up to 80 percent, up to 85 percent, up to 90 percent, or up to 95 percent by weight based on the total weight of the supersize coat.

A second major component of the supersize composition is sodium lauryl sulfate (SLS). It is an organic compound with the formula CH₃(CH₂)₁₁OSO₃Na. It is an anionic surfactant used in formulations, such as a lubricant, to improve flowability of the granulation and reduce ejection force. It is the sodium salt of dodecyl hydrogen sulfate, the ester of dodecyl alcohol and sulfuric acid.
The amount of sodium lauryl sulfate in the supersize coating composition is 5 percent to 30 percent based on an overall weight of the supersize coating composition, preferably not less than 10 percent, not less than 15 percent, not less than 20 percent, or not less than 25 percent, by weight based on the total weight of the supersize coat. In some other embodiments, sodium lauryl sulfate can be present in an amount of up to 25 percent, up to 20 percent, up to 15 percent, or up to 10 percent, by weight based on the total weight of the supersize coat.

The supersize coat can be formed, in some embodiments, by providing a supersize coating composition in which the components are dispersed or otherwise dissolved in a common solvent. Preferably, the solvent is water. In some embodiments, the metal salt of a long-chain fatty acid is dispersed in water to prepare a dispersion and sodium lauryl sulfate is dissolved in water to prepare a solution. The solution of sodium lauryl sulfate is then blended with dispersion of metal salt of a long-chain fatty acid to form a supersize coating composition. In some other embodiments, the metal salt of a long-chain fatty acid is dispersed in the solution of sodium lauryl sulfate and water and blended to form a supersize coating composition. Other optional components of the supersize coating composition include curing agents, surfactants, antifoaming agents, biocides, and other particulate additives known in the art for use in supersize compositions.

In some embodiments, the supersize coating composition displays a transmittance of at least 5 percent, at least 20 percent, at least 40 percent, at least 50 percent, or at least 60 percent, according to the Transmittance Test. The Transmittance Test is described in detail in the "Examples" section of the present disclosure.

The supersize coating composition can be coated onto the abrasive layer to form a wet supersize coat, from which water can be removed to form a dry supersize coat. The coating of the above composition onto the abrasive layer can be carried out using any known process.

In some embodiments, weight of dry supersize coat is less than 20 gsm (grams per square meter).

In some other embodiments, dry supersize coat is substantially transparent and displays a transmittance of at least 5 percent, at least 20 percent, at least 40 percent, at least 50 percent, or at least 60 percent, according to the Transmittance Test.

### ATTACHMENT LAYERS

An attachment layer can be affixed to the backing to help secure the abrasive article to a sanding block, power tool, or even the hand of an operator. In FIG. 2, the attachment layer 230 is comprised of a pressure-sensitive adhesive. The attachment layer can also use a mechanical retention mechanism. In FIG. 3, the attachment layer 330 is comprised of a fibrous material, such as a scrim or non-woven material forming half of a hook and loop attachment system. The other half can be provided, for example, on a sanding block or the movable chuck of a power tool. Such attachment systems are advantageous because they allow the abrasive article to be easily replaced when worn out.

Additional options and advantages of these abrasive articles are described in U.S. Patent Nos. 4,988,554 (Peterson, et al.), 6,682,574 (Carter, et al.), 6,773,474 (Koehnle et al.), and 7,329, 175 (Woo et al.).

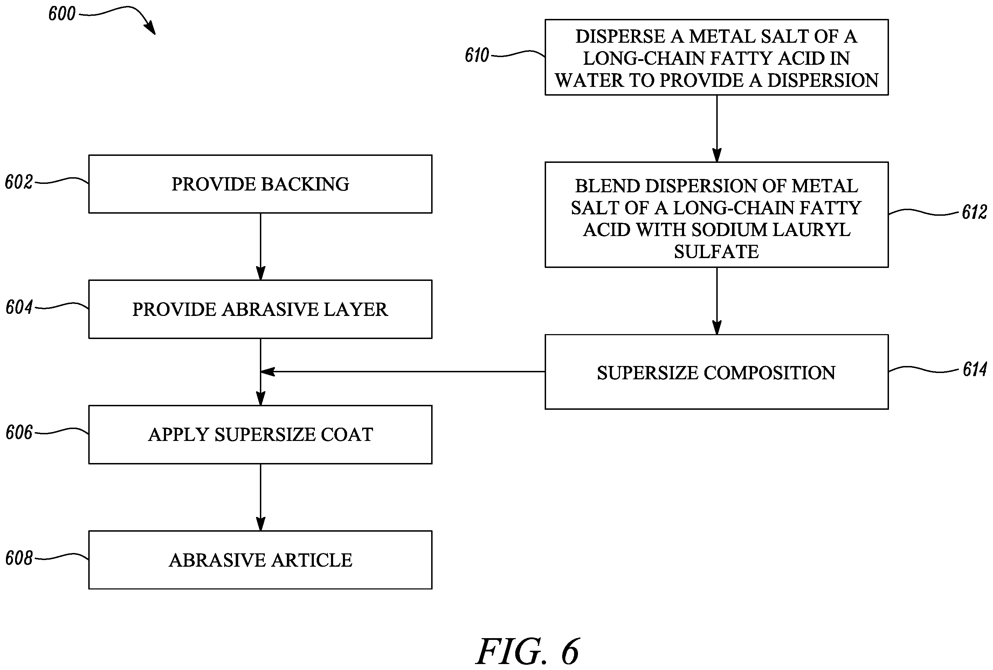

FIG. 6 illustrates a flowchart for a method of forming (600) the abrasive article (608) according to an embodiment of the present disclosure. The method comprises providing the backing (602) on which an adhesive layer (604) is attached. Further, a supersize coat is applied (606). A supersize coating composition (614) is prepared by dispersing a metal salt of a long-chain fatty acid in water to provide a dispersion (610) and blending the dispersion with sodium lauryl sulfate (612). Finally, the method includes coating the supersize coating composition onto an abrasive layer to form a wet supersize coat; and removing the water from the wet supersize coat to form a dry supersize coat.

Dried supersize coat is substantially transparent and very effective relative to conventional supersize compositions.

### EXAMPLES

Objects and advantages of this disclosure are further illustrated by the following nonlimiting examples, but the particular materials and amounts thereof recited in these examples, as well as other conditions and details, should not be construed to unduly limit this disclosure.

Abbreviations for materials and reagents used in the examples are as follows:

| | |
|---|---|
| EC1428: | Commercially available zinc stearate obtained from E-Chem |
| EC1733: | Commercially available calcium stearate obtained from E-Chem |
| EC1511: | Commercially available calcium stearate obtained from E-Chem |
| EC994C: | Commercially available zinc stearate obtained from E-Chem |
| EC1007A: | Commercially available calcium stearate obtained from E-Chem |
| Frecut 6-5: | Commercially available "clear" calcium stearate obtained from Devden |
| Stepanol WA-Extra HP: | 30% Sodium lauryl sulfate in water solution obtained from Stepan |

### Examples 1-10: Examples 1, 3, 5, 7 and 9 are Reference Examples

Sodium lauryl sulfate (SLS)-metal stearate blends were prepared by weighing out the appropriate amount of SLS (Stepanol WA-Extra: 30% solids SLS/water solution) and commercially available metal stearate dispersions in 30mL glass vials as shown in Table 1. The samples were mixed on a VWR vortex mixer for 10 seconds and set aside for coating. The mixed weights for the 100% and 60% blended samples are shown below.

**TABLE 1**

| | **1** | **2** | **3** | **4** | **5** | **6** | **7** | **8** | **9** | **10** |
|---|---|---|---|---|---|---|---|---|---|---|
| Clear calcium stearate (Frecut 6-5) | 100 | 60 | | | | | | | | |
| Zinc stearate (EC 1428) | | | 100 | 60 | | | | | | |
| Calcium stearate (EC1733) | | | | | 100 | 60 | | | | |
| Calcium stearate (EC1511) | | | | | | | 100 | 60 | | |
| Zinc stearate (EC994C) | | | | | | | | | 100 | 60 |
| 30% Sodium lauryl sulfate in water (Stepanol WA-Extra HP) | | 40 | | 40 | | 40 | | 40 | | 40 |

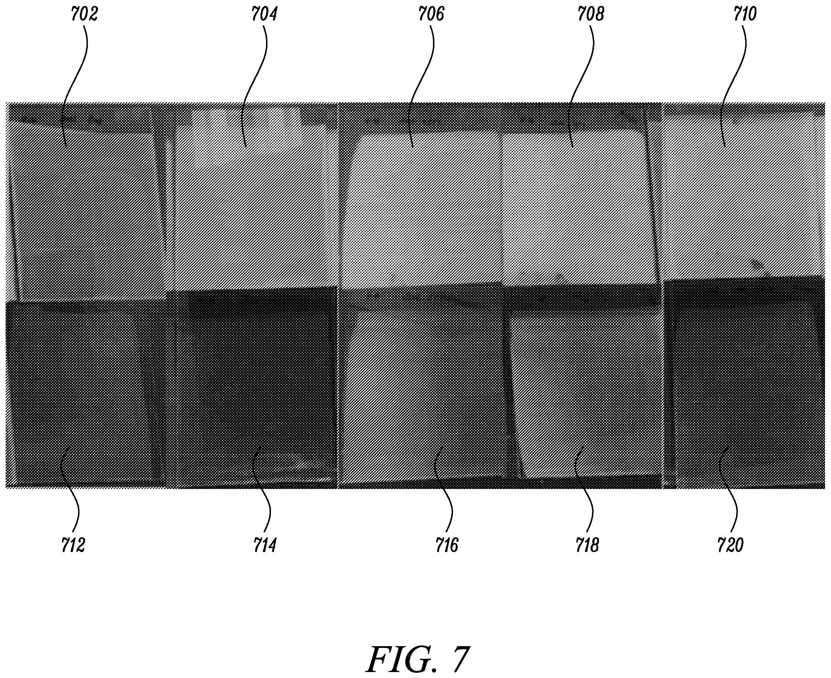

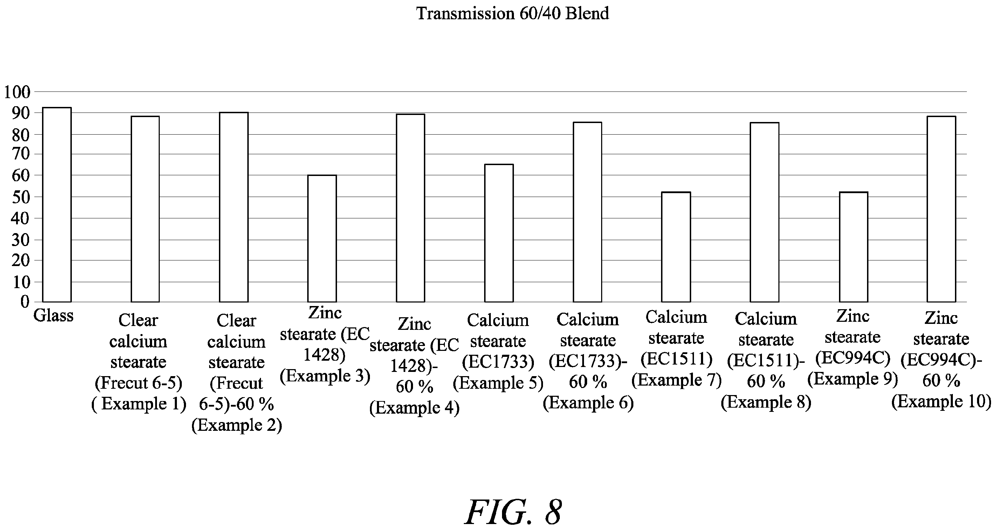

Once the samples were mixed, approximately 1 mL of each sample was transferred via pipette to a cleaned glass panel (6"x8"x0.125") and spread evenly using a #8 wire bound rod. The coated glass samples were dried at ambient temperature for 30 minutes. Percentage Transmittance was then measured according to ASTM D1003 standard using a spectrophotometer, model "HAZE- GARD PLUS", from BYK Instruments, Columbia, Maryland (i.e., according to the "Transmittance Test"). Results of the same have been illustrated in FIG. 7 and FIG. 8. Specifically, FIG. 7 illustrates various images of the cleaned glass panels coated with composition of Examples 1-10. More specifically, coated glass samples 702 to 720 illustrate the images of the cleaned glass panels coated with composition of Examples 1-10, respectively. Further, FIG. 8 illustrates measured percentage transmission of coated glass samples.

### Examples 11-22: Examples 11, 16, 17 and 22 are Reference Examples

To determine the effect of the varying amount of SLS on the transmittance, 2 different stearates i.e. calcium stearate (EC1511) and zinc stearate (EC994C) were blended with a SLS solution in an amount from 100% Stearate to 100% SLS, according to the quantities listed in Table 2.

**TABLE 2**

| | **Calcium stearate (EC1511)** | | | | | | | **Zinc stearate (EC994C)** | | | | |
|---|---|---|---|---|---|---|---|---|---|---|---|---|
| | **11** | **12** | **13** | **14** | **15** | **16** | **17** | **18** | **19** | **20** | **21** | **22** |
| Calcium stearate (EC1511) | 100 | 80 | 60 | 40 | 20 | 0 | | | | | | |
| Zinc stearate (EC994C) | | | | | | | 100 | 80 | 60 | 40 | 20 | 0 |
| Stepanol WA-Extra HP | 0 | 20 | 40 | 60 | 80 | 100 | 0 | 20 | 40 | 60 | 80 | 100 |

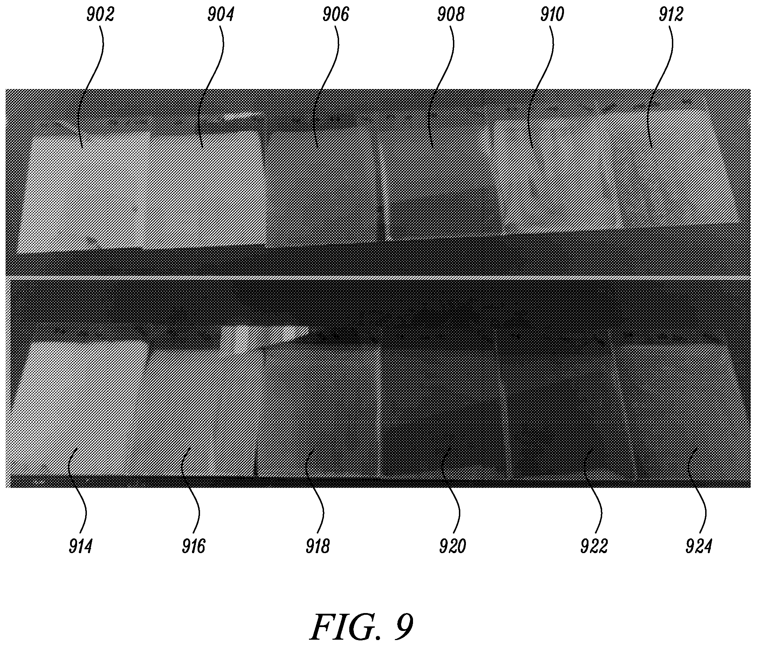

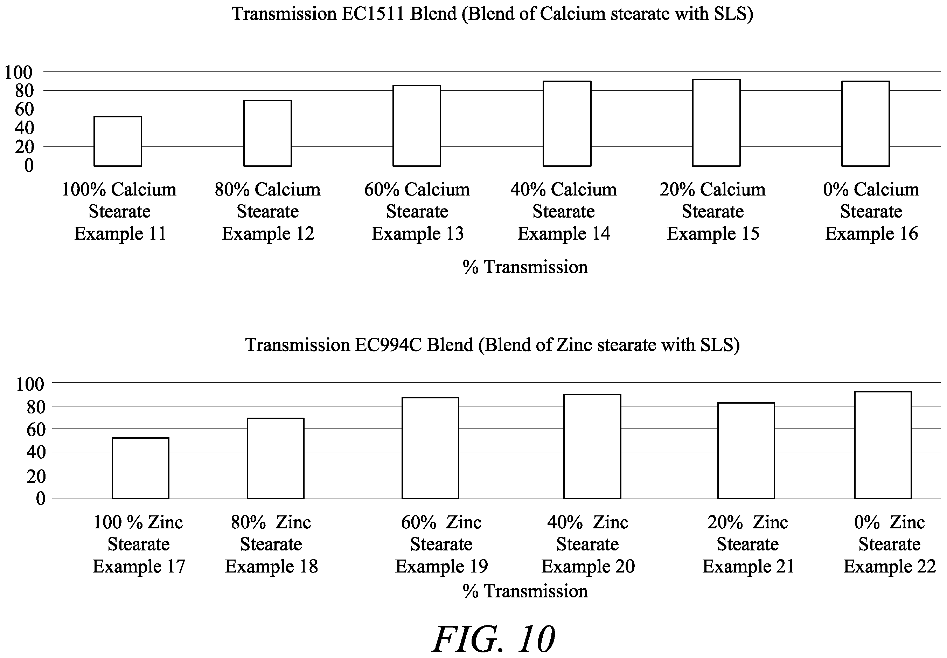

Percentage transmission along with images of the EC1511 (Calcium Stearate) and EC994C (Zinc Stearate) SLS coatings on glass are shown in FIGS. 9 and 10, respectively. Specifically, in FIG. 9, coated glass samples 902 to 924 illustrate the images of the cleaned glass panels coated with composition of Examples 11-22, respectively. Further, FIG. 10 illustrates measured percentage transmission of coated glass samples containing blends of Calcium stearate-SLS solution and zinc stearate-SLS solution.

Percentage transmission improves greatly until ~50% of the SLS solution is added. After that point, the improvement in percentage transmission is much less significant and plateaus out.

### Examples 23-25 Examples 23 and 24 are Reference Examples

**Table 3**

| | **23** | **24 (Heat Cleared)** | **25** |
|---|---|---|---|
| Calcium stearate (EC1511) | 100 | 100 | 50 |
| Stepanol WA-Extra HP | 0 | 0 | 50 |

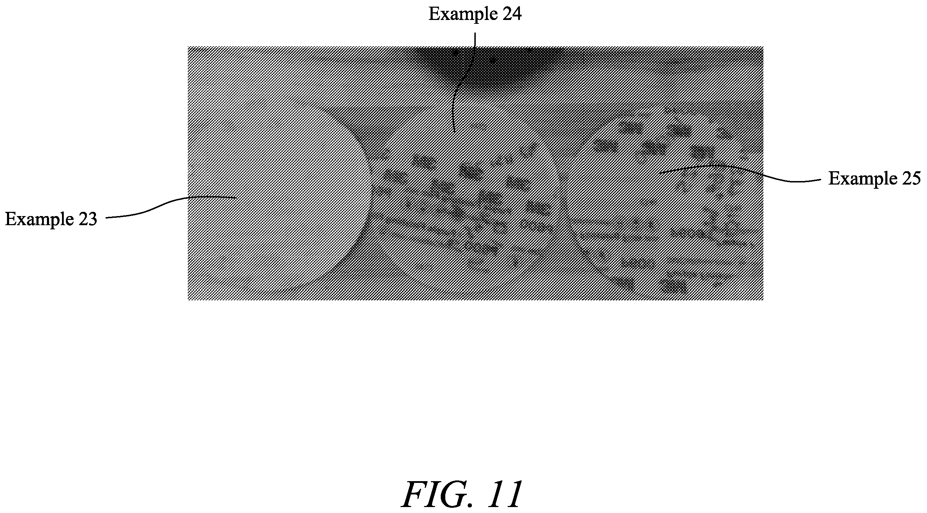

Samples with different supersize coatings were created by spray applying different stearate and stearate-SLS blend as shown in Table 3 above, using a 3M Performance Spray Gun equipped with a 1.3mm spray nozzle. All the samples were sprayed onto factory made 3M Purple Finishing Film 260L P600 6" disc. After spraying, the wet coatings were dried with a heat gun until the water evaporated and the coating was dry to touch. One sample series labeled "EC1511 Heat Cleared" was included to represent a "heat cleared" or melted supersize. This sample was heated with the heat gun until the supersize coating transitioned from wet to opaque to clear. Once the coating was clear, the heat was removed and the abrasive disc was cooled to room temperature. Results of the same have been illustrated in FIG. 11. Specifically, FIG. 11 illustrates various images of samples coated with composition of Examples 23-25.

The abrasive discs were tested using a Festool 5mm DA with a backup pad. Air inlet pressure was set to 50 psi. The test substrates were automotive painted steel panels obtained from ACT Test Panel (18"x24") with a RK8211 clear coat. The panels were sanded in 4 vertical lanes ~6" wide x 18" long for 1 minute in each lane. Each disc was sanded for a total of 2 minutes (2 lanes) stopping after 1 minute to measure panel weight loss (cut) and finish (Rz).

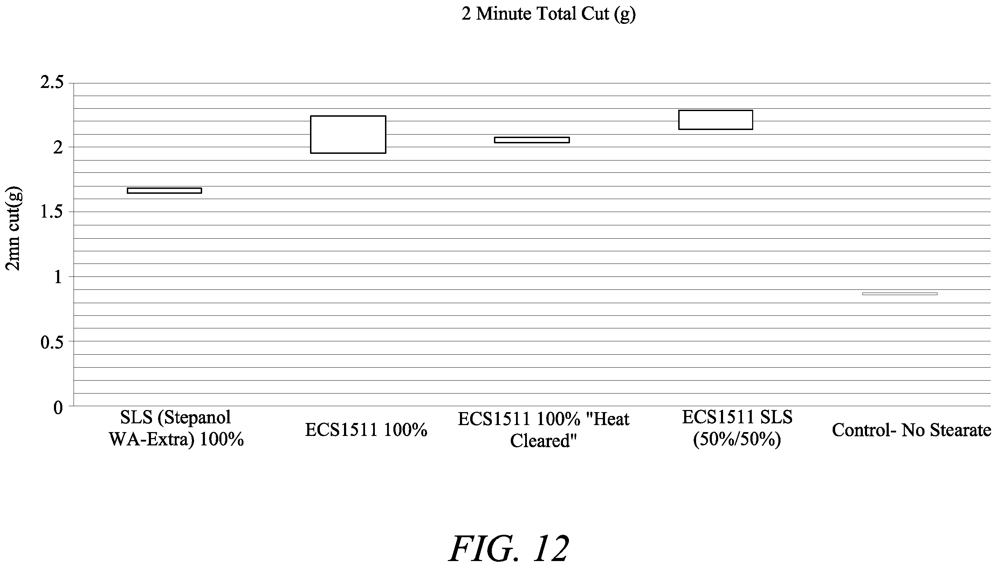

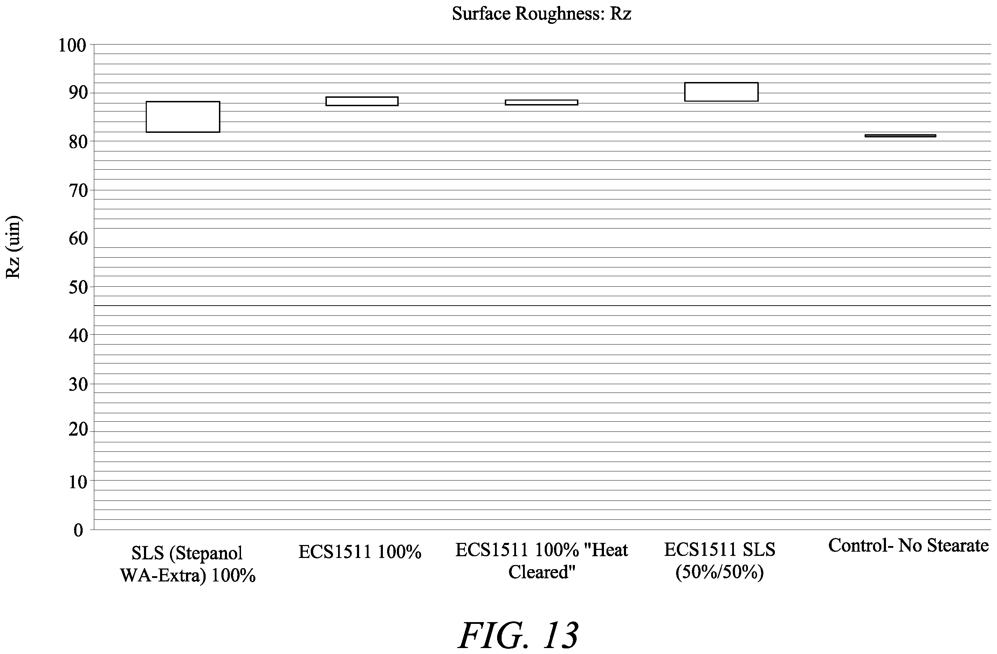

The cut performance data is shown in FIG. 12 and surface roughness data is shown in FIG. 13.

The preceding description, given in order to enable one of ordinary skill in the art to practice the claimed disclosure, is not to be construed as limiting the scope of the disclosure, which is defined by the claims.

## Claims

1. A supersize coating composition for an abrasive article (100, 200, 300, 400, 500) comprising:
a metal salt of a long-chain fatty acid; and **characterized in that** the supersize coating composition further comprises
sodium lauryl sulfate, wherein sodium lauryl sulfate is present in an amount of from 5 percent to 30 percent based on an overall weight of the supersize coating composition.

2. The supersize coating composition of claim 1, wherein the metal salt of the long-chain fatty acid comprises zinc stearate or calcium stearate.

3. The supersize coating composition of claim 1 or 2, wherein the supersize coating composition displays a transmittance of at least 60 percent according to the Transmittance Test.

4. A method for making the supersize coating composition of any of the preceding claims, the method comprising:
dispersing the metal salt of the long-chain fatty acid in water to provide a dispersion; and
blending the dispersion with sodium lauryl sulfate.

5. An abrasive article (100, 200, 300, 400, 500) comprising:
a backing (110, 210, 310, 410, 510);
an abrasive layer (112, 212, 312, 412, 512) disposed on the backing (110, 210, 310, 410, 510); and
a supersize coat (122, 222, 322, 422, 522) disposed over the abrasive layer (112, 212, 312, 412, 512), wherein the supersize coat (122, 222, 322, 422, 522) comprises the supersize coating composition according to any of claims 1 to 3.

6. The abrasive article (100, 200, 300, 400, 500) of claim 5, wherein the metal salt of the long-chain fatty acid comprises zinc stearate or calcium stearate.

7. The abrasive article (100, 200, 300, 400, 500) of claim 5 or 6, wherein the supersize coat (122, 222, 322, 422, 522) is substantially transparent.

8. The abrasive article (100, 200, 300, 400, 500) of claim 7, wherein the supersize coat (122, 222, 322, 422, 522) displays a transmittance of at least 60 percent according to the Transmittance Test.

9. The abrasive article (100, 200, 300, 400, 500) of any of claims 5 to 8, wherein the abrasive layer (112, 212, 312, 412, 512) comprises a plurality of abrasive particles (114).

10. The abrasive article (100, 200, 300, 400, 500) of any of claims 5 to 9, wherein a thickness of the backing (110, 210, 310, 410, 510) is less than or equal to 5 millimeters.

11. A method of making an abrasive article (100, 200, 300, 400, 500) according to any of claims 5 to 10, the method comprising:
dispersing a metal salt of a long-chain fatty acid in water to provide a dispersion;
blending the dispersion with sodium lauryl sulfate to form a supersize coating composition;
coating the supersize coating composition onto an abrasive layer (112, 212, 312, 412, 512) to form a wet supersize coat; and
removing the water from the wet supersize coat to form a dry supersize coat.

12. The method of claim 11, wherein the weight of the dry supersize coat is less than 20 gsm.

13. The method of claim 11 or 12, wherein the dry supersize coat is substantially transparent.

14. The method of claim 13, wherein the dry supersize coat displays a transmittance of at least 60 percent according to the Transmittance Test.

15. The method of any of the claims 11 to 14, wherein the abrasive layer (112, 212, 312, 412, 512) comprises a plurality of abrasive particles (114).

## Patentansprüche

1. Eine Zusatzdeckbeschichtungszusammensetzung für einen Schleifgegenstand (100, 200, 300, 400, 500), umfassend:
ein Metallsalz einer langkettigen Fettsäure; und **dadurch gekennzeichnet, dass** die Zusatzdeckbeschichtungszusammensetzung weiter umfasst
Natriumlaurylsulfat, wobei Natriumlaurylsulfat in einer Menge von 5 Prozent bis 30 Prozent, bezogen auf ein Gesamtgewicht der Zusatzdeckbeschichtungszusammensetzung, vorhanden ist.

2. Die Zusatzdeckbeschichtungszusammensetzung nach Anspruch 1, wobei das Metallsalz der langkettigen Fettsäure Zinkstearat oder Calciumstearat umfasst.

3. Die Zusatzdeckbeschichtungszusammensetzung nach Anspruch 1 oder 2, wobei die Zusatzdeckbeschichtungszusammensetzung eine Durchlässigkeit von mindestens 60 Prozent gemäß dem Durchlässigkeitstest aufweist.

4. Ein Verfahren zum Herstellen der Zusatzdeckbeschichtungszusammensetzung nach einem der vorstehenden Ansprüche, wobei das Verfahren umfasst:
Dispergieren des Metallsalzes der langkettigen Fettsäure in Wasser, um eine Dispersion bereitzustellen; und
Vermischen der Dispersion mit Natriumlaurylsulfat.

5. Ein Schleifgegenstand (100, 200, 300, 400, 500), umfassend:
einen Träger (110, 210, 310, 410, 510);
eine Schleifschicht (112, 212, 312, 412, 512), die auf dem Träger (110, 210, 310, 410, 510) angeordnet ist; und
eine Zusatzdeckbeschichtungszusammensetzung (122, 222, 322, 422, 522), die über der Schleifschicht (112, 212, 312, 412, 512) angeordnet ist, wobei die Zusatzdeckbeschichtungszusammensetzung (122, 222, 322, 422, 522) die Zusatzdeckbeschichtungszusammensetzung nach einem der Ansprüche 1 bis 3 umfasst.

6. Der Schleifgegenstand (100, 200, 300, 400, 500) nach Anspruch 5, wobei das Metallsalz der langkettigen Fettsäure Zinkstearat oder Calciumstearat umfasst.

7. Der Schleifgegenstand (100, 200, 300, 400, 500) nach Anspruch 5 oder 6, wobei die Zusatzdeckbeschichtung (122, 222, 322, 422, 522) im Wesentlichen transparent ist.

8. Der Schleifgegenstand (100, 200, 300, 400, 500) nach Anspruch 7, wobei die Zusatzdeckbeschichtung (122, 222, 322, 422, 522) eine Durchlässigkeit von mindestens 60 Prozent gemäß dem Durchlässigkeitstest aufweist.

9. Der Schleifgegenstand (100, 200, 300, 400, 500) nach einem der Ansprüche 5 bis 8, wobei die Schleifschicht (112, 212, 312, 412, 512) eine Mehrzahl von Schleifteilchen (114) umfasst.

10. Der Schleifgegenstand (100, 200, 300, 400, 500) nach einem der Ansprüche 5 bis 9, wobei eine Dicke des Trägers (110, 210, 310, 410, 510) kleiner als oder gleich 5 Millimeter ist.

11. Ein Verfahren zum Herstellen eines Schleifgegenstands (100, 200, 300, 400, 500) nach einem der Ansprüche 5 bis 10, wobei das Verfahren umfasst:
Dispergieren eines Metallsalzes einer langkettigen Fettsäure in Wasser, um eine Dispersion bereitzustellen;
Vermischen der Dispersion mit Natriumlaurylsulfat, um eine Zusatzdeckbeschichtungszusammensetzung zu bilden;
Beschichten der Zusatzdeckbeschichtungszusammensetzung auf eine Schleifschicht (112, 212, 312, 412, 512), um eine feuchte Zusatzdeckbeschichtung zu bilden; und
Entfernen des Wassers aus der feuchten Zusatzdeckbeschichtung, um eine trockene Zusatzdeckbeschichtung zu bilden.

12. Das Verfahren nach Anspruch 11, wobei das Gewicht der trockenen Zusatzdeckbeschichtung kleiner als 20 g/m² ist.

13. Das Verfahren nach Anspruch 11 oder 12, wobei die trockene Zusatzdeckbeschichtung im Wesentlichen transparent ist.

14. Das Verfahren nach Anspruch 13, wobei die trockene Zusatzdeckbeschichtung eine Durchlässigkeit von mindestens 60 Prozent gemäß dem Durchlässigkeitstest aufweist.

15. Das Verfahren nach einem der Ansprüche 11 bis 14, wobei die Schleifschicht (112, 212, 312, 412, 512) eine Mehrzahl von Schleifteilchen (114) umfasst.

## Revendications

1. Composition de revêtement de surencollage pour un article abrasif (100, 200, 300, 400, 500) comprenant :
un sel métallique d'un acide gras à longue chaîne ; et **caractérisée en ce que** la composition de revêtement comprend en outre
du laurylsulfate de sodium, dans laquelle
le laurylsulfate de sodium est présent en une quantité allant de 5 pour cent à 30 pour cent sur la base d'un poids total de la composition de revêtement de surencollage.

2. Composition de revêtement de surencollage selon la revendication 1, dans laquelle le sel métallique de l'acide gras à longue chaîne comprend du stéarate de zinc ou du stéarate de calcium.

3. Composition de revêtement de surencollage selon la revendication 1 ou 2, dans laquelle la composition de revêtement de surencollage présente une transmittance d'au moins 60 pour cent selon le test de transmittance.

4. Procédé de fabrication de la composition de revêtement de surencollage selon l'une quelconque des revendications précédentes, le procédé comprenant :
la dispersion du sel métallique de l'acide gras à longue chaîne dans de l'eau pour obtenir une dispersion ; et
le mélange de la dispersion avec du laurylsulfate de sodium.

5. Article abrasif (100, 200, 300, 400, 500) comprenant :
un support (110, 210, 310, 410, 510) ;
une couche abrasive (112, 212, 312, 412, 512) disposée sur le support (110, 210, 310, 410, 510) ; et
une couche de surencollage (122, 222, 322, 422, 522) disposée pardessus la couche abrasive (112, 212, 312, 412, 512), dans lequel la couche de surencollage (122, 222, 322, 422, 522) comprend la composition de revêtement de surencollage selon l'une quelconque des revendications 1 à 3.

6. Article abrasif (100, 200, 300, 400, 500) selon la revendication 5, dans lequel le sel métallique de l'acide gras à longue chaîne comprend du stéarate de zinc ou du stéarate de calcium.

7. Article abrasif (100, 200, 300, 400, 500) selon la revendication 5 ou 6, dans lequel la couche de surencollage (122, 222, 322, 422, 522) est sensiblement transparente.

8. Article abrasif (100, 200, 300, 400, 500) selon la revendication 7, dans lequel le revêtement de surencollage (122, 222, 322, 422, 522) présente une transmittance d'au moins 60 pour cent selon le test de transmittance.

9. Article abrasif (100, 200, 300, 400, 500) selon l'une quelconque des revendications 5 à 8, dans lequel la couche abrasive (112, 212, 312, 412, 512) comprend une pluralité de particules abrasives (114).

10. Article abrasif (100, 200, 300, 400, 500) selon l'une quelconque des revendications 5 à 9, dans lequel une épaisseur du support (110, 210, 310, 410, 510) est inférieure ou égale à 5 millimètres.

11. Procédé de fabrication d'un article abrasif (100, 200, 300, 400, 500) selon l'une quelconque des revendications 5 à 10, le procédé comprenant :
la dispersion d'un sel métallique d'un acide gras à longue chaîne dans de l'eau pour obtenir une dispersion ;
le mélange de la dispersion avec du laurylsulfate de sodium pour former un composition de revêtement de surencollage ;
l'application de la composition de revêtement de surencollage sur une couche abrasive (112, 212, 312, 412, 512) pour former une couche de surencollage humide ; et
l'élimination de l'eau de la couche de surencollage humide pour former une couche de surencollage sèche.

12. Procédé selon la revendication 11, dans lequel le poids de la couche de surencollage sèche est inférieur à 20 g/m².

13. Procédé selon la revendication 11 ou 12, dans lequel la couche de surencollage est sensiblement transparente.

14. Procédé selon la revendication 13, dans lequel la couche de surencollage présente une transmittance d'au moins 60 pour cent selon le test de transmittance.

15. Procédé selon l'une quelconque des revendications 11 à 14, dans lequel la couche abrasive (112, 212, 312, 412, 512) comprend une pluralité de particules abrasives (114).
